# EUROPEAN PATENT APPLICATION

(11) **EP 1 535 764 A1**
(43) Date of publication of application: **01.06.2005**
(21) Application number: 03712897.2
(22) Date of filing: 25.03.2003
(51) Int. Cl.: B60C 19/12, B29C 73/22

(54) **TUBELESS TIRE**

(30) Priority: 25.03.2002 JP 2002082375
(71) Applicant: Honda Giken Kogyo Kabushiki Kaisha, Minato-ku, Tokyo 107-8556 (JP); THE YOKOHAMA RUBBER CO., LTD., Tokyo 105-8685 (JP)
(72) Inventor: MAKINO, Satoshi, HONDA GIKEN KOGYO K. K., Wako-shi, Saitama 351-0193 (JP); TOYOSHIMA, Takayuki, HONDA GIKEN KOGYO K. K., Wako-shi, Saitama 351-0193 (JP); WATANABE, Koji, THE YOKOHAMA RUBBER CO., LTD., Hiratsuka-shi, Kanagawa 254-8601 (JP); SEKIGUCHI, Takumi, THE YOKOHAMA RUBBER CO., LTD., Hiratsuka-shi, Kanagawa 254-8601 (JP); FUKUTOMI, Takashi, THE YOKOHAMA RUBBER CO., LTD., Hiratsuka-shi, Kanagawa 254-8601 (JP); YAMAGUCHI, Yoichi, THE YOKOHAMA RUBBER CO., LTD., Hiratsuka-shi, Kanagawa 254-8601 (JP); NAITO, Mitsuru, THE YOKOHAMA RUBBER CO., LTD., Hiratsuka-shi, Kanagawa 254-8601 (JP)
(74) Representative: Liska, Horst, Dr.-Ing.
(86) International application number: PCT/JP2003/003586
(87) International publication number: WO 2003/080370

(57) **Abstract**

This invention relates to a tubeless tire capable of obtaining a sufficient sealing property even if application amount of a sealant agent is lessened. Tubeless tire 1 of this invention includes sealant layer 4 formed of the sealant agent so as to adhere firmly to the inside of inner liner layer 3 that keeps the inside of the tire airtightly. And cover layer 5 formed of the elastic body with high permeability adheres firmly to the inside of the sealant layer 4.

## Description

### TECHNICAL FIELD OF THE INVENTION

This invention relates to a tubeless tire preventing air leakage from a tire by a sealant agent provided in an inside, even if the tire receives external damage by treading a nail, etc., during traveling.

### BACKGROUND OF THE INVENTION

Conventionally, a tubeless tire (referred to as a "sealant tire" henceforth), inside of which is applied with sealant agent consisting of adhesive rubber etc. is known. Even if this sealant tire receives external damage by treading a nail, etc., outflow of air can be controlled completely by a self-sealing property of the sealant agent of burying a hole by flowing into the external damage part. And this sealant agent is formed in a certain amount of (4mm or more) thickness for obtaining sufficient self-sealing property, and the viscosity is set to somewhat low.

However, the conventional sealant tire poses the following problems.

In order to obtain the self-sealing property, when the thickness is thickened by increasing the amount of applications of the sealant agent, there arises a problem that causes the increase in the weight of a tire. On the other hand, if the amount of applications of the sealant agent is lessened and the thickness is made thin, and when foreign substances, such as a nail, fall off from the tire, the problem that the sealant agent blows off outside by inner pressure of the tire with a result that the hole cannot be closed, is involved.

Moreover, if the viscosity of the sealant agent is made low in order to obtain a self-sealing property, there is a possibility of the deviation of the sealant agent, due to its flowability when subjected to vibration accompanying rotation of the tire during traveling. The deviation of the sealant agent is the causative factor of generating vibration during traveling due to unbalance of a tire. On the other hand, in a state that a big nail or a big screw, etc. is stuck on a tire, and when the viscosity of the sealant agent is made high, sufficient self-sealing property cannot be obtained and it becomes a factor of an air leakage.

Furthermore, when the viscosity of the sealant agent is made high, when the foreign substance that is irregular on the surfaces, such as a wood screw, is stuck on a tire, the sealant agent does not adhere to the surface of the foreign substance enough. On the other hand, if the viscosity of the sealant agent is made low, the foreign substance shakes by vibration accompanying the rotation of the tire, involving the possibility that the sealant agent exfoliated from the foreign substance by this shaking, and further the hole formed with the foreign substance is expanded.

### SUMMARY OF THE INVENTION

Hereupon, the object of this invention is to provide a tubeless tire satisfying a sufficient self-sealing property even when the amount of applications of a sealant agent is lessened for mainly reducing the weight of a tire. Moreover, another object of this invention is to provide a tubeless tire that can prevent vibration of vehicles due to the deviation of the sealant agent by controlling a flow of the sealant agent with low viscosity during traveling.

In this invention, a cover layer formed of a seat that adheres firmly to the inside of the sealant layer and having permeability is provided in a tubeless tire which is provided inside of a keeping air-tightness layer that keeps the inside of a tire airtightly.

Here, a "keeping air-tightness layer" means a layer that keeps the inside of a tire airtightly, and generally means an inner liner layer provided in an innermost part of a tire. For example, when a belt layer for adjusting the rigidity in a tire functions also so as to keep the inside of the tire airtightly, this belt layer or the like is also included. Moreover, as materials, rubber, resin and these compounds, and the materials combined by reinforcing materials are further listed as these layers.

According to this invention, when foreign substances, such as a nail, fall off from a tire, the sealant agent that moves so that it may be drawn in the hole opened by the nail etc, adheres firmly to inner side of the keeping air-tightness layer and the surface of the cover layer, to thereby receive adhesive resistance that works in the reverse direction with respect to the move direction. Also, in order to obtain self-sealing property of the sealant agent, even when the viscosity is made low, flow of the sealant agent is suppressed by the above-described adhesive resistance.

Furthermore, in a manufacture method in which the sealant layer is laminated together with each part material of a tire in a state of a sheet-like rubber composite containing butyl rubber and peroxide, etc, for example, the cover layer and the sealant layer rubber composite are laminated in order on a forming machine first. And the inner liner layer serving as a keeping air-tightness layer, for example is laminated, and henceforth formation is performed according to a forming method of the usual tubeless tire. Thus, if an unfinished tire formed in the above way is vulcanized, the butyl rubber contained in the sealant layer rubber composite is depolymerized by peroxide and heat, and changes into an adhesive sealant agent. At this time, gas generated by the chemical reaction of the sealant layer rubber composite is discharged inside the tire through the cover layer that has permeability.

In addition, it is preferable that the reinforcing agent that can adjust the viscosity to the sealant agent freely is mixed in the tubeless tire of this invention.

Thereby in addition to the above-described action, the viscosity of the sealant agent (flowability) is adjusted by adjusting the amount of the reinforcing agent to be mixed in the sealant agent.

Moreover, this invention provides a tubeless tire in which pluralities of compound layers consisting of the sealant layer formed of the sealant agent and the cover layers that adhere to the inside of the sealant layers are provided inside of the keeping air-tightness layer that keeps inside of the tire airtightly, wherein the cover layer in the compound layers of at least innermost layer has permeability.

With the tubeless tire of such composition, for example, even when the cover layer of the first sheet receives external damage by foreign substances, such as a nail, the damaged part of the cover layer is buried by the sealant layer provided in the inner side.

In addition, the sealant agent is preferably divided at least in either direction of the width direction or the circumferential direction of a tire.

Thereby, the flow of the sealant agent that is going to flow is suppressed during traveling, by the action of the adhesive resistance for every divided sealant agent.

### BRIEF DESCRIPTION OF THE DRAWINGS

Fig.1 is a major structure of a tubeless tire according a first embodiment of this invention by enlarged sectional view.
Fig.2 is a major structure showing a sealant layer and a cover layer at the time of escaping from a nail from the tire of Fig. 1 by enlarged sectional view.
Fig.3 is a major structure of the tubeless tire according to a second embodiment by enlarged sectional view.
Fig.4 is a major structure of the tubeless tire according to a third embodiment by enlarged sectional view.

### PREFERRED EMBODIMENT OF THE INVENTION

### FIRST EMBODIMENT

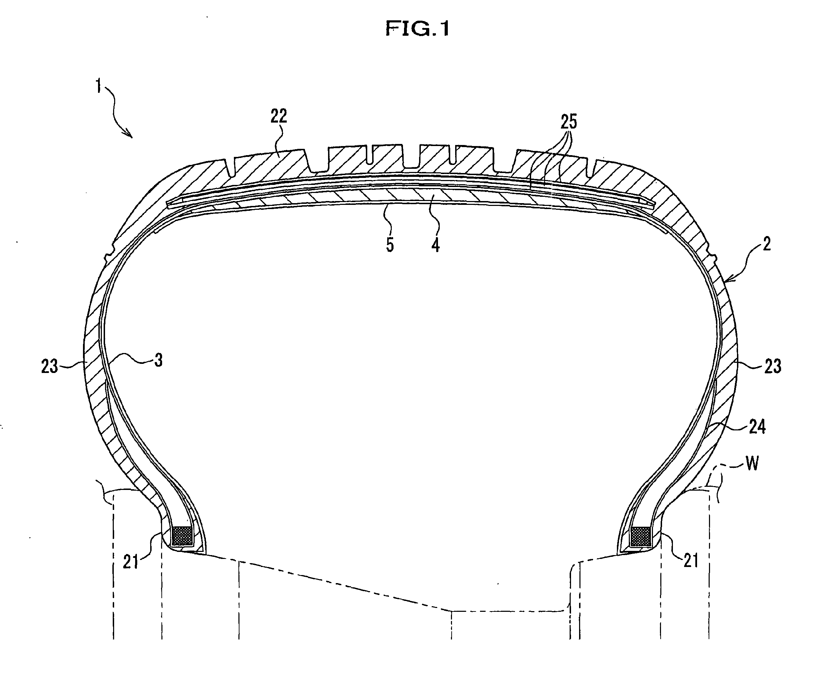

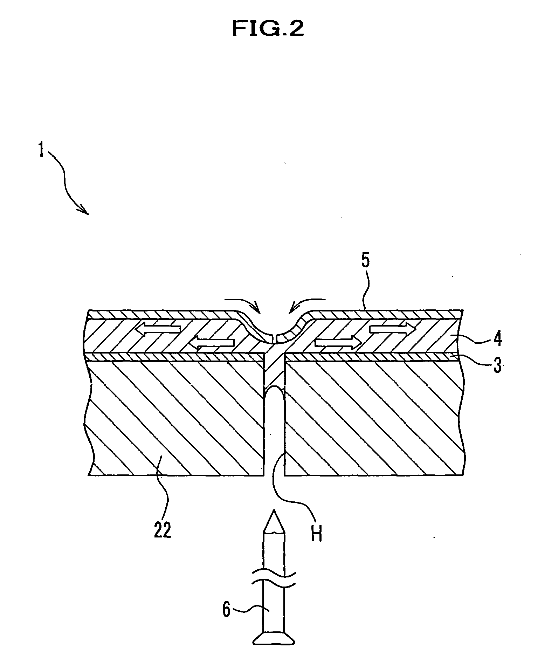

Hereafter, with reference to the drawings, details of the tubeless tire according to this invention will be explained. In the drawing for reference, Fig.1 is a major structure of a tubeless tire of this invention by enlarged sectional view, and Fig.2 is a major structure showing a sealant layer and the action of a cover layer at the time of escaping from a nail from a tire.

As shown in Fig.1, tubeless tire 1 has outer layer part 2 and inner liner layer (keeping air-tightness layer) 3 consisting of rubber or the like which is adhered to the whole inner surface of the outer layer part 2. Furthermore, this tubeless tire 1 includes sealant layer 4 that adheres firmly to the inside of the inner liner layer 3, and the cover layer 5 that adheres firmly to the inside of this sealant layer 4.

The outer layer part 2 has bead part 21 that anchors a tubeless tire to Wheel W, tread part 22 that touches the ground, and sidewall part 23 which is a region between the bead part 21 and the tread parts 22. Also, inside the bead part 21, the tread part 22, and the sidewall part 23, carcass 24 consisting of fiber material for maintaining the form of tubeless tire 1 is formed. And between the tread part 22 and the carcass 24, two or more belt layers 25 for providing the rigidity of the tread part 22 are provided.

The inner liner layer 3 has the function to keep the inside of the tubeless tire 1 airtightly, and prevents the air charged into the inside of the tubeless tire 1 from leaking outside. And this inner liner layer 3 adheres to the whole inner surface of the outer layer part 2.

The sealant layer 4 is formed in substantially the same width with the width of the tread part 22. The sealant agent which forms this sealant layer 4 is formed by heating the sheet-like rubber composite mainly containing butyl rubber, and peroxide, etc. Furthermore, the reinforcing agent capable of adjusting the viscosity of the sealant agent freely is mixed in the sealant layer rubber composite serving as the sealant agent. Short fiber for reinforcing obtained by cutting a fiber material such as nylon and polyester generally used for a tire in length of 1 mm to 10 mm can be used. In addition, this reinforcing material is not limited to the short fiber, but a carbon fiber, or a fiberglass, etc. may be adopted. Moreover, the sheet in the profile of cloth such as nylon or polyester etc, woven as having an extension property, or in the profile of mesh may be stacked one upon another.

The cover layer 5 is formed with the sheet consisting of rubber having the permeability of natural rubber etc. Here, "permeability" means the excellence in permeability capable of penetrating inside of a tire by the gas generated when chemical reaction is induced by the sealant layer rubber composite. Also, the cover layer 5 is formed with the width of somewhat larger than the width of the sealant layer 4, and set to the thickness within the range of about 0.5mm to 5mm.

In addition, the thickness of this cover layer 5 can be suitably changed in consideration of a property of cover layer material, the physical properties of the sealant agent and thickness. However, in order to reduce the weight of a tire, it is preferable to form in thinner thickness. Moreover, in this embodiment, the cover layer 5 is made of rubber. However, as long as the permeability of this invention is exerted, any material can be used. For example, the sealant layer rubber material made of butadiene rubber as the main composite element, a non-woven fabric, resin, or these compounds, etc. may be used as cover materials.

Next, a manufacture method of the tubeless tire 1 will be explained.

First, the cover layer 5 and the sealant layer rubber composite used as the sealant layer 4 are laminated on the forming machine, not shown, orderly. Subsequently, inner liner layer 3 is laminated and henceforth formation is performed according to a forming method of the usual tubeless tire. Thus if an unfinished tire formed in the above way is vulcanized, the butyl rubber contained in the sealant layer rubber composite is depolymerized by peroxide and heat, and thus the sealant layer rubber composite changes into an adhesive sealant agent. At this time, the gas generated by the chemical reaction of the sealant layer rubber composite is discharged inside the tire through the cover layer 5 that has permeability. In the tubeless tire 1 formed in the above way, since the gas is removed from the sealant layer 4, the sealant layer 4 and the cover layer 5 firmly adheres.

In addition, as for the manufacture method, after forming from the inner liner layer 3 to the outer layer part 2 by the usual forming method and vulcanizing, the sealant agent may be applied onto the inner liner layer 3, and the cover layer 5 may be laminated thereon. However, according to the manufacture method of this invention, the tire according to the present invention can be manufactured by adding a required process to the product line, which is used for manufacturing the conventional tire, therefore it is preferable to manufacture by the manufacture method of this embodiment.

The action of the sealant layer 4 and the cover layer 5 at the time of escaping from the nail 6 once stuck as far as penetrating from the tread part 22 to the cover layer 5 of the tubeless tire 1 will be explained with reference to Fig.2 below.

As shown in Fig.2, when the nail 6 falls out from a tubeless tire 1, the sealant agent of the sealant layer 4 moves so that it may be drawn in hole H opened by the nail 6 by the inner pressure of the tubeless tire 1. The sealant agent that moves in this way, adheres firmly to inner side of the inner liner layer 3 and outer side of the cover layer 5, to thereby receive the resistance that works in the reverse direction with respect to the move direction. This working direction is shown by hollow arrow in Fig.2. Therefore, the hole H is reliably closed by the sealant agent without flowing into the exterior by the inner pressure of the tubeless tire 1.

According to the above, in the first embodiment, the following effects can be obtained.
(1) Since the sealant agent receives adhesive resistance from the field of the both sides by adhering firmly to the inner side of the inner liner layer 3 and the outer side of the cover layer 5, the outflow to the exterior of the sealant agent by the inner pressure of the tubeless tire 1 is prevented. Therefore, in order to reduce the weight of a tire, even if the amount of applications of the sealant agent is lessened, sufficient self-sealing property can be obtained.
(2) Since the sealant layer 4 adheres firmly to the inner liner layer 3 and the cover layer 5 and enclosed between the each layer 3 and 5, even when the viscosity is made low so that the self-sealing property of the sealant agent may be made high, the flow of the sealant agent is suppressed by the each layer 3 and 5. Therefore, vibration of vehicles by the deviation of the sealant agent can be prevented.
(3) Since the flow is controlled by the sealant layer 4 adhering firmly to the inner liner layer 3 and the cover layer 5, even if the viscosity of the sealant agent is set to be lower than that of the conventional one, when traveling with a foreign substance stuck, for example, shaking of the foreign substance is suppressed. Thereby, even when traveling with the foreign substance that has unevenness on the surfaces, such as a wood screw, stuck, the adhesive power to the foreign substance that has unevenness on the surface is heightened by lowering the viscosity of the sealant agent, to thereby suppress the shaking of the foreign substance and expansion of the hole can be prevented.

### SECOND EMBODIMENT

Below, a second embodiment of the tubeless tire according to this invention will be explained. In this embodiment, the tubeless tire of the first embodiment is partially changed, therefore the components and portions of the same designation as those in the first embodiment are designated the same numerals and signs, omitting and simplifying the overlapping explanation.

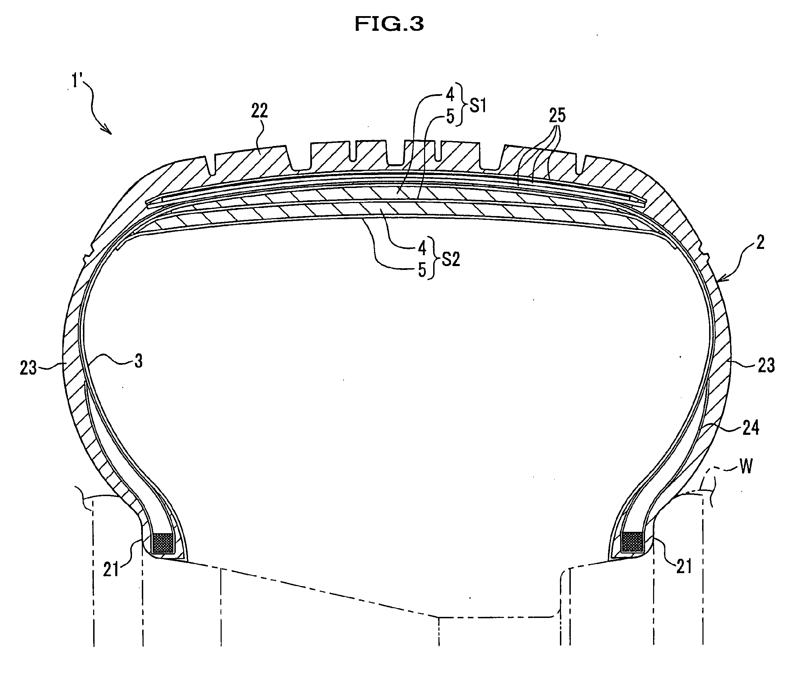

As shown in Fig.3, the tubeless tire 1' according to the second embodiment includes the sealant layer 4 firmly adhering to the inner side (inside) of the cover layer 5 of the tubeless tire 1 according to the first embodiment, and the cover layer 5 adhering to the inner side of the sealant layer 4. Namely, the tubeless tire 1' has dual structure of the first sealing layers (compound layers) S1 consisting of the sealant layer 4 adhering firmly to the inner liner layer 3 and the cover layer 5, and the second sealing layers (compound layers) S2 consisting of the sealant layer 4 adhering to the first sealing layer S1 and the cover layer 5.

According to such composition, the following benefits can be obtained.
(4) Even when foreign substances, such as a nail, carry out the stab of the cover layer 5 of the first sealing layer S1, the stab part of this cover layer 5 is buried by the sealant layer 4 of the second sealing layer S2 formed in the inside.

### THIRD EMBODIMENT

Below, the third embodiment in the tubeless tire according to this invention will be explained. In this embodiment, the tubeless tire of the first embodiment is partially changed, therefore the components and portions of the same designation as those used in the first embodiment are designated the same numerals and signs, omitting and simplifying the overlapping explanation.

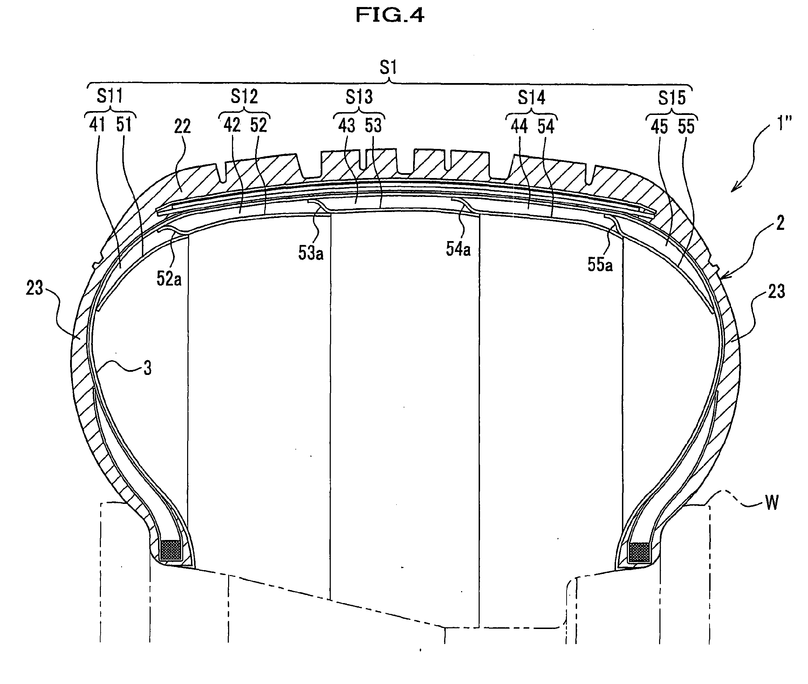

As shown in Fig.4, tubeless tire 1" according to this embodiment is arranged in such a way that the sealant layer 4 of the first embodiment and the cover layer 5 are divided. That is, the first sealing layers S1 consisting of the sealant layer 4 and the cover layer 5 are formed with the first to fifth division sealing layers S11 to S15 arranged orderly toward another side from one side of the width direction of the tubeless tire 1".

The first division sealing layers S11 consist of the first sealant layer 41 and the first cover layer 51, and adhere firmly to the portion ranging from the sidewall part 23 in the inner liner layer 3 to the tread part 22. The second sealing layers S12 consist of the second sealant layer 42 and the second cover layer 52. Partition wall part 52a that divides the sealant layer 41 of the above first and the second sealant layer 42 in the width direction of the tubeless tire 1" is formed in one edge of this second cover layer 52.

The third to fifth division sealing layers S13 to S15 are formed substantially in the same way as the second division sealing layers S12. The second and third sealant layers 42 and 43 are divided by partition wall part 53a of the third cover layer 53. Moreover, the third and fourth sealant layers 43 and 44 are divided by partition wall part 54a of the fourth cover layer 54. The fourth and fifth sealant layers 44 and 45 are divided by the partition wall part 55a of the fifth cover layer 55.

According to such composition, the following benefits can be obtained in the third embodiment.
(5) Since the flow of the sealant agent during traveling is suppressed by each partition wall part 52a to 55a, imbalanced generating of the tire weight by the deviation of the sealant agent can be reduced sharply.
(6) Since the flow of the sealant layers 41 to 45 is controllable in each chamber consisting of the inner liner layer 3, the partition wall parts 52a to 55a, and the cover layers 51 to 55, the sealing layers S1 can be extended as far as substantially the center of the sidewall part 23. In the above way, the sealing layers S1 are extended as far as the sidewall part 23, to thereby prevent the outflow of the air in a tire by self-sealing property of the sealant agent, even when a foreign substance is stuck from the sidewall part 23.
(7) One-side of each partition wall part 52a to 55a overlaps with adjoining cover layers 52 to 55, therefore for example, when laminating the sealant layers 41 to 45 on a forming machine in a state of a sheet-like rubber composite, each division sealing layer S11 to S15 can be laminated sequentially from the one side of the forming machine. Thus Manufacture of the tubeless tire can be easily achieved.

As described above, this invention is not limited to the above-described embodiments, but is carried out with various modes.
(i) The form of the outer layer part 2 of the tubeless tires 1 to 1", carcass 24, or belt layer 25 can be changed suitably.
(ii) In the second embodiment, it is formed in dual structure by the first and second sealing layers S1 and S2. However, this invention is not limited thereto, but any number of the sealing layers may be formed. In this case, compared with the structure that forms only one sealing layer, thickness of the sealant layer can be made thin in each sealing layer. Therefore, increase in weight can be suppressed, securing a seal performance, if a cover layer lighter than a sealant layer is used.
(iii) In the structure of providing a sealing layer in multiplex like the second embodiment, the quality of the material of each cover layer can be changed suitably. For example, in the second embodiment, permeability of only the quality of the material of the cover layer 5 in the second sealing layers S2 which is innermost layer (layer arranged in the innermost part) can be made high, and the permeability of the quality of the material of the cover layer 5 in the first sealing layers S1 can be made low. In this case, in a manufacture method for forming by vulcanizing the whole tire after laminating the sealant layer 4 in a state of a sheet-like rubber composite, only the sealant layer 4 in the second sealing layer S2 adheres firmly to the two cover layers 5 and 5. Moreover, the gas generated from the sealant layer rubber composite is accumulated between the sealant layers 4 and the cover layers 5 in the first sealing layers S1. Thus, the cover layer 5 of the first sealing layers S1 enclosing gas therein is easily separated from the sealant layer 4. Therefore, when foreign substances, such as a nail, are stuck on a tire, the cover layer 5 is raised at the tip of the foreign substance, preventing the hole from opening on the cover layer 5. Furthermore, even when the hole opens on the cover layer 5 of the first sealing layers S1, the second sealing layers S2 exert the same action effect as the first embodiment even if the hole opens on the cover layer 5 of the first sealing layers S1, therefore the hole can be closed certainly.
(iv) In the third embodiment, the sealant layer 4 is formed divided in the width direction of the tubeless tire by the cover layers 51 to 55. However, this invention is not limited thereto, but may be divided in subdivision packs in the both directions.
(v) In the third embodiment, in order to divide the sealant layer 4, five cover layers 51 to 55 are used. However, this invention is not limited thereto, but the partition wall part that projects toward outside may be formed integrally in the cover layer 5 of the first embodiment.
(vi) Moreover, multi-layer structure as shown in the second embodiment, and division structure as shown in the third embodiment may be combined. Such a combination can be suitably changed according to the use of a tire, an operating condition, and the kind of foreign substance conceivable, etc.

## Claims

1. A tubeless tire comprising: a sealant layer formed of a sealant agent adheres firmly to inside of a keeping air-tightness layer that keeps the inside of said tubeless tire airtightly; and a cover layer formed of a sheet adhering firmly to the inside of said sealant layer and having permeability.

2. A tubeless tire as described in claim 1, wherein said sealant agent contains a reinforcing agent that adjusts its viscosity.

3. A tubeless tire, comprising pluralities of compound layers consisting of a sealant layer formed of a sealant agent and a cover layer that adheres firmly to the inside of the sealant layer inside the keeping air-tightness layer that keeps the inside of the tire airtightly, wherein the cover layer in the compound layers of at least innermost layer has permeability.

4. A tubeless tire as described in claim 1, wherein the sealant agent is divided at least in either direction of the width direction or the circumferential direction of a tire.
